# FASCICULE DE BREVET EUROPEEN

(11) **EP 2 119 588 B1**
(45) Date de publication et mention de la délivrance du brevet: **28.09.2011**
(21) Numéro de dépôt: 09154702.6
(22) Date de dépôt: 10.03.2009
(51) Int. Cl.: B60N 2/015, B60N 2/30, B60N 2/36, B60R 13/02

(54) **Dispositif et procédé de positionnement d'un siège sur une structure de véhicule automobile**
Vorrichtung und Verfahren zum positionieren eines Sitzes auf einer Kraftfahrzeug-Struktur
Device and method for positioning a seat on an automotive vehicle structure

(30) Priorité: 15.05.2008 FR 0853130
(43) Date de publication de la demande: 18.11.2009
(73) Titulaire: PEUGEOT CITROËN AUTOMOBILES S.A., 78140 Vélizy Villacoublay (FR)
(72) Inventeur: Sylvant, Christophe, 25420, COURCELLES LES MONTBELIARD (FR)
(74) Mandataire: Vigand, Régis Louis Michel

(56) Documents cités:
- EP-A- 0 845 385
- EP-A- 1 582 411
- FR-A- 2 663 888
- FR-A- 2 663 889

## Description

L'invention concerne les sièges qui équipent certains véhicules automobiles, et plus précisément le positionnement de ces sièges par rapport aux structures des véhicules automobiles.

Comme le sait l'homme de l'art, de nombreux sièges de véhicule automobile, qui sont implantés en deuxième ou troisième rang, c'est-à-dire derrière le premier rang situé à l'avant de l'habitacle, comportent de deux à quatre parties principales qui sont choisies parmi un dossier dit « 1/3 », un dossier dit « 2/3 », un dossier complet (3/3) une assise dite « 1 /3 », une assise dite « 2/3 » et une assise complète.

Ce type de siège peut être livré sur une chaîne de montage (ou d'assemblage) soit en plusieurs parties, soit pré-assemblé.

Dans le premier cas, les différentes pièces du siège sont introduites les unes après les autres à l'intérieur de la structure du véhicule automobile afin d'y être assemblées. Le positionnement des pièces et leur assemblage ne posent pas de problème particulier aux techniciens, mais ils nécessitent qu'ils fassent de nombreuses opérations, ce qui requiert du temps et donc augmente le coût de production.

Dans le second cas, le siège pré-assemblé doit tout d'abord être introduit à l'intérieur de la structure du véhicule automobile, puis positionné précisément dans sa position finale afin d'être solidarisé à la structure. Compte tenu du poids et de l'encombrement du siège pré-assemblé, le positionnement précis de ce dernier dans l'espace relativement exigu de l'habitacle est problématique, malgré l'assistance d'équipements robotisés. Il ralentit fréquemment les opérations d'assemblage et donc augmente le coût de production.

Afin de faciliter le positionnement du siège, il a été proposé, notamment dans le document brevet EP 845385, de définir dans les côtés longitudinaux de la structure du véhicule des découpes destinées à recevoir des axes fixés au siège sur ses deux faces latérales opposées. Mais, compte tenu de leur positionnement, ces découpes n'offrent que très peu de degré de liberté pour positionner le siège dans la structure.

Un dispositif de positionnement de siège similaire et conforme au préambule de la revendication 1 est présenté dans la demande de brevet française FR 2663888.

L'invention a donc pour but d'améliorer la situation, et notamment de faciliter le positionnement d'un siège pré-assemblé dans la structure d'un véhicule automobile, par le dispositif selon la revendication 1, dédié au positionnement d'un siège pré-assemblé par rapport à la structure d'un véhicule automobile, et, destiné à être solidarisé à la structure du véhicule automobile.

Le dispositif de positionnement selon l'invention peut comporter d'autres caractéristiques qui peuvent être prises séparément ou en combinaison, et font l'objet des revendications dépendantes de produit. Notamment :
➢ la seconde paroi peut par exemple faire un angle d'environ 90° avec la première paroi ;
➢ la seconde paroi peut par exemple comprendre un trou muni d'un filetage pour permettre la fixation de la première garniture dans une position sensiblement parallèle à la face latérale du siège ;
➢ la seconde paroi peut par exemple comprendre une face externe et une patte qui fait un angle aigu par rapport à cette face externe et propre à permettre la fixation de la première garniture par rapport à la seconde paroi au moyen d'un cordon ;
➢ la seconde paroi peut par exemple comprendre un trou complémentaire pour permettre la fixation d'une seconde garniture propre à recouvrir un longeron de la structure ;
   - la première extrémité peut être propre à permettre le passage d'un axe qui saille sur la face latérale d'une assise du siège ;
   - la seconde extrémité de son ouverture peut être plus large que la première extrémité de cette dernière ;
   - chaque première paroi peut comprendre au niveau d'une partie supérieure une extension par rapport au niveau de la première extrémité de son ouverture, agencée pour être logée dans une garniture de manière à assurer son blocage suivant une direction longitudinale du véhicule.

L'invention propose également un procédé, dédié au positionnement d'un siège pré-assemblé par rapport à la structure d'un véhicule automobile, et consistant :
- à solidariser à la structure du véhicule automobile, en deux endroits choisis, deux dispositifs de positionnement du type de celui présenté ci-avant, puis
- à introduire à l'intérieur de la structure un siège comprenant deux faces latérales opposées et sur chacune desquelles saille un axe, puis
- à déplacer le siège de sorte que les axes passent respectivement dans les premières extrémités libres des ouvertures des premières parois des deux dispositifs de positionnement, puis coulissent dans ces ouvertures jusqu'à ce qu'ils soient reçus par les secondes extrémités de ces dernières.

Le procédé selon l'invention peut comporter d'autres caractéristiques qui peuvent être prises séparément ou en combinaison, et font l'objet des revendications dépendantes de procédé. Notamment :
- on peut d'abord passer l'un des axes dans la première extrémité libre de l'ouverture de la première paroi de l'un des dispositifs de positionnement, puis on peut passer l'autre axe dans la première extrémité libre de l'ouverture de la première paroi de l'autre dispositif de positionnement ;
- une fois que les axes ont été reçus dans les secondes extrémités, on peut plaquer des extrémités libres de ces axes contre des faces internes des premières parois des deux dispositifs de positionnement ;
- on peut fixer une première garniture sur chaque seconde paroi qui prolonge une première paroi d'un dispositif de positionnement, dans une position sensiblement parallèle à la face latérale correspondante du siège ;
   ➢ on peut fixer chaque première garniture au moyen d'une vis que l'on visse dans un trou, muni d'un filetage, de la seconde paroi du dispositif de positionnement correspondant ;
   - avant de visser une première garniture, on peut procéder à sa fixation, au moyen d'un cordon, par rapport à une patte qui fait un angle aigu par rapport à une face externe de la seconde paroi du dispositif de positionnement correspondant ;
- on peut fixer une seconde garniture, destinée à recouvrir un longeron de la structure, sur chaque seconde paroi qui est solidarisée à une première paroi d'un dispositif de positionnement, grâce à un trou complémentaire qui est défini dans cette seconde paroi.

D'autres caractéristiques et avantages de l'invention apparaîtront à l'examen de la description détaillée ci-après, et des dessins annexés, sur lesquels :
- les figures 1 à 3 illustrent schématiquement, dans trois vues en perspective selon des directions différentes, un exemple de réalisation d'un dispositif de positionnement selon l'invention,
- la figure 4 illustre schématiquement, dans une vue en perspective, un exemple de fixation sur un élément structurel rapporté d'un dispositif de positionnement du type de celui illustré sur les figures 1 à 3,
- la figure 5 illustre schématiquement, dans une vue en perspective, un exemple de réception d'un axe de siège pré-assemblé dans une seconde extrémité d'une ouverture du dispositif de positionnement illustré sur les figures 1 à 3, ainsi que le positionnement d'un cordon de fixation de garniture latérale par rapport audit dispositif de positionnement,
- la figure 6 illustre schématiquement, dans une vue en perspective du dessous, un siège pré-assemblé dont un axe est réceptionné dans la seconde extrémité d'une ouverture du dispositif de positionnement illustré sur les figures 1 à 3, ainsi qu'un exemple de positionnement et de solidarisation d'une partie d'une garniture latérale par rapport audit dispositif de positionnement,
- la figure 7 illustre schématiquement, dans une vue en perspective, la partie arrière de la structure d'un véhicule automobile après la fixation d'un dispositif de positionnement selon l'invention, mais avant le placement d'un siège pré-assemblé, ainsi que le positionnement final (anticipé) d'une garniture latérale sur ladite partie arrière de la structure, et
- la figure 8 illustre schématiquement, dans une vue en perspective, la partie arrière de la structure d'un véhicule automobile après le positionnement d'un siège pré-assemblé et de garnitures latérales.

Les dessins annexés pourront non seulement servir à compléter l'invention, mais aussi contribuer à sa définition, le cas échéant.

Comme indiqué dans la partie introductive, l'invention est destinée à faciliter le positionnement d'un siège pré-assemblé dans la structure d'un véhicule automobile.

On considère dans ce qui suit, à titre d'exemple non limitatif, que le siège (SI) est implanté au niveau du deuxième (et dernier) rang d'une voiture (V), c'est-à-dire dans la partie arrière (AH) de l'habitacle de cette dernière. Mais, l'invention n'est pas limitée à ce rang. En effet, un siège selon l'invention peut être implanté en n'importe quel rang d'un véhicule automobile, dès lors qu'il est placé derrière le premier rang qui est situé à l'avant de l'habitacle.

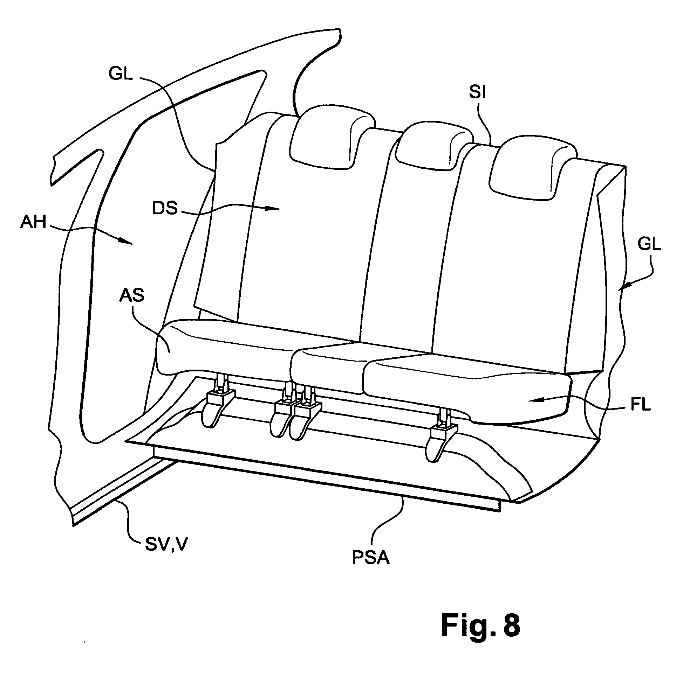

Par ailleurs, on entend ici par « siège pré-assemblé » (SI) un siège d'au moins deux places dont les pièces principales de dossier et d'assise ont été assemblées les une aux autres avant qu'il ne soit introduit dans la structure (ou caisse) du véhicule automobile (V). Par conséquent, et comme illustré sur la figure 8, on appellera ci-après « assise » AS l'élément du siège SI (éventuellement constitué de plusieurs pièces) qui est destiné à supporter au moins un passager, et par « dossier » DS l'élément du siège SI (éventuellement constitué de plusieurs pièces) contre lequel peut s'adosser au moins un passager.

L'invention propose tout d'abord un dispositif de positionnement D destiné à faciliter le positionnement d'un siège (pré-assemblé) SI, par exemple du type de celui illustré sur la figure 8, par rapport à la structure d'un véhicule automobile V (ici une voiture).

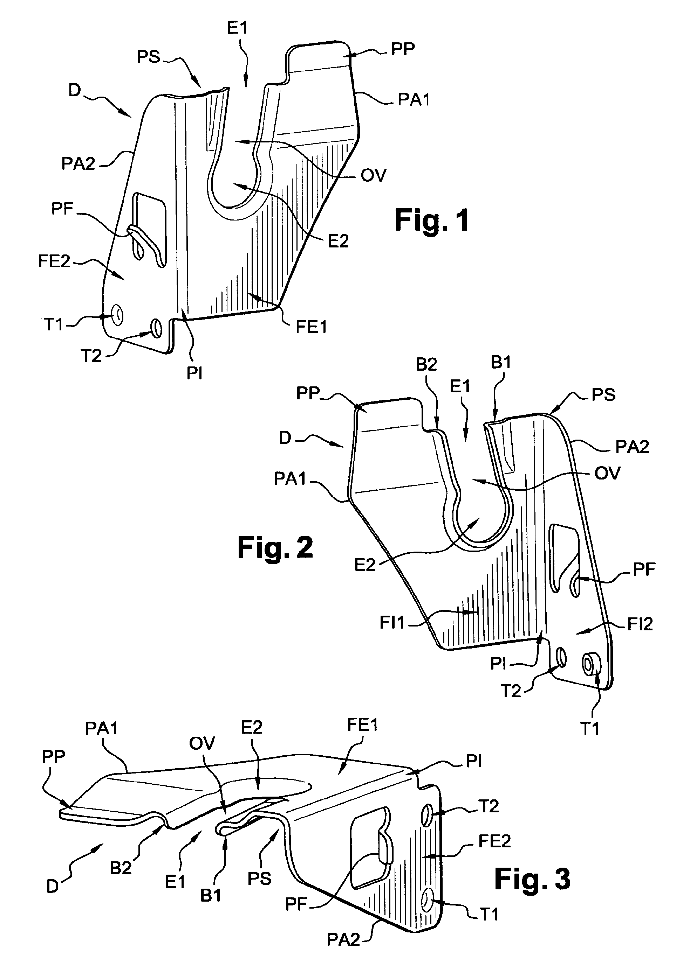

On a schématiquement représenté sur les figures 1 à 3 un exemple de réalisation non limitatif de dispositif de positionnement D selon l'invention.

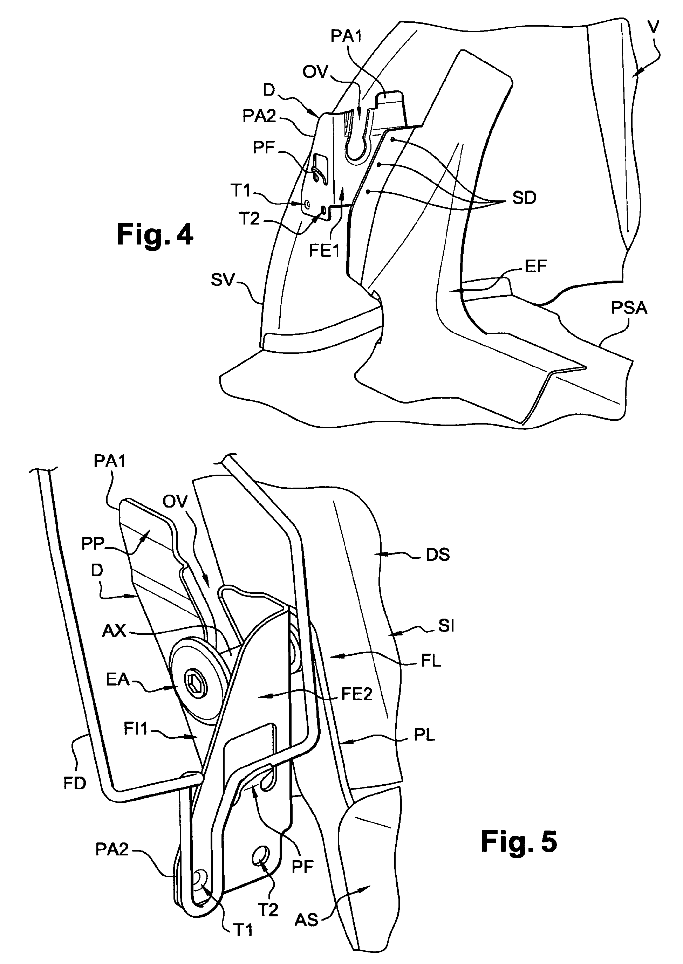

Un tel dispositif (de positionnement) D est destiné à être solidarisé à la structure SV du véhicule automobile V, soit directement, soit indirectement via au moins un élément de fixation EF comme c'est le cas dans l'exemple non limitatif illustré sur la figure 4. Dans cet exemple, l'élément de fixation EF est une pièce qui est solidarisée (par exemple par soudage) sur un élément de structure PSA qui fait partie de la structure (ou caisse) SV et qui est destiné à supporter le siège SI.

Un dispositif D comprend au moins une première paroi PA1 dans laquelle est définie une ouverture OV, par exemple par découpe. Par exemple cette première paroi PA1 est réalisée dans un matériau métallique, tel que l'acier ou l'aluminium. On notera que si l'on utilise de l'acier il est avantageux de souder la première paroi PA1 sur la caisse, tandis que si l'on utilise de l'aluminium il est avantageux de fixer la première paroi PA1 sur la caisse au moyen de vis.

Dans l'exemple non limitatif illustré sur la figure 4, le dispositif D est solidarisé à l'élément de fixation EF au niveau de la face externe FE1 de sa première paroi PA1. Cette solidarisation se fait par exemple au moyen de plusieurs points de soudure (ici trois points de soudure ont été représentés). Mais, elle pourrait également se faire par boulonnage ou vissage.

L'ouverture OV comprend une première extrémité E1 libre (c'est-à-dire débouchant au niveau d'une face située dans une partie « supérieure » PS du dispositif D (et donc de la première paroi PA1)) et une seconde extrémité E2 située à un niveau inférieur à la première extrémité E1 et communiquant avec cette dernière via une zone intermédiaire.

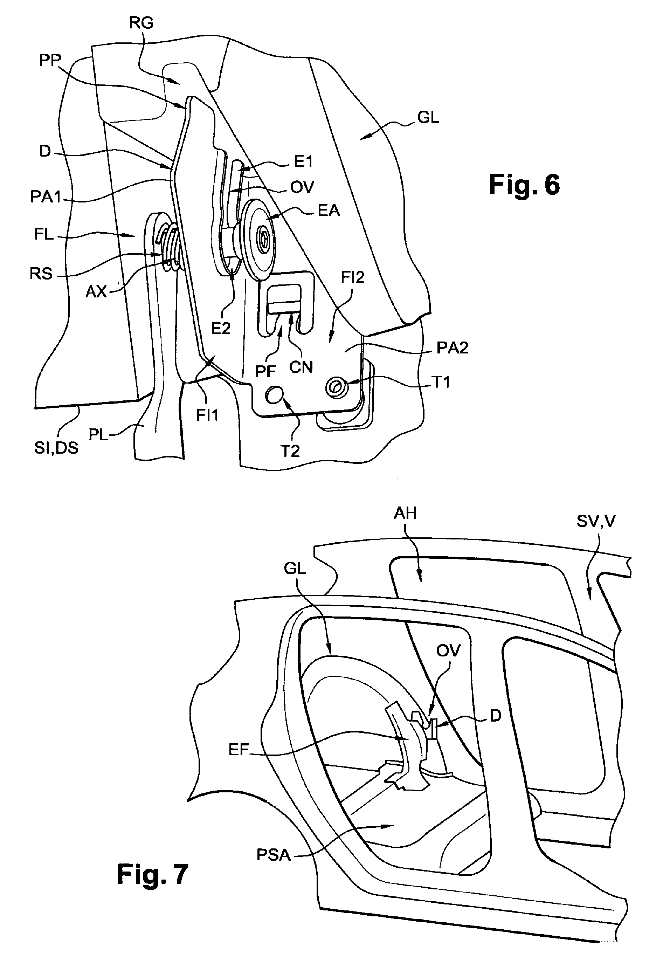

Comme cela est illustré sur les figures 5 et 6, la première extrémité E1 est destinée à permettre la réception et le passage d'un axe (ou d'une protubérance) AX qui saille sur une face latérale FL du siège SI. Elle (E1) constitue donc une portion de guidage propre à guider la descente d'une protubérance (ou d'un axe) AX jusqu'au fond d'une ouverture OV.

Il est important de noter, comme on le verra plus loin, que le positionnement du siège SI se fait au moyen de deux dispositifs D solidarisés sensiblement à un même niveau par rapport à la direction longitudinale du véhicule V et sensiblement à égale distance par rapport au plan médian contenant cette direction longitudinale. Par conséquent, le siège SI comprend deux axes AX saillant sur ses deux faces latérales FL, opposées l'une à l'autre. On entend ici par « face latérale » une face qui est orientée vers un côté longitudinal de la structure SV du véhicule V.

Dans l'exemple non limitatif illustré, chaque axe AX saille de la partie inférieure du dossier DS du siège SI, via une plaque de liaison PL qui est solidarisée à l'assise AS et au dossier DS sur une face latérale FL. Mais, on peut envisager une variante dans laquelle chaque axe AX saille de l'assise AS.

A titre d'exemple non limitatif, et comme illustré sur la figure 6, chaque axe AX est par exemple monté à coulissement dans le siège SI (ici dans le dossier DS) et est pourvu d'un ressort RS dont les extrémités opposées sont respectivement connectées à une tête d'axe EA (située au niveau de son extrémité libre) et au siège SI (par exemple à sa plaque latérale PL). Chaque axe AX est ainsi monté sous une force de rappel élastique qui contraint sa tête EA à se rapprocher du siège SI. Dans ce cas, lorsque l'on veut positionner un siège SI, on doit maintenir ses deux axes AX écartés de ses faces latérales FL. Mais, on peut envisager une variante dans laquelle chaque axe AX est vissé dans le siège SI et peut être écarté ou rapproché d'une face latérale FL de ce denier par vissage ou dévissage.

La seconde extrémité E2 de l'ouverture OV d'une première paroi PA1 d'un dispositif D est agencée de manière à recevoir l'un des deux axes AX du siège SI, une fois qu'il a été reçu par la première extrémité E1 et qu'il a coulissé dans la zone intermédiaire, afin de permettre le positionnement de ce dernier à un niveau choisi par rapport à la direction longitudinale (« calage en X »), et son support au moins momentané.

L'ouverture OV est donc en quelque sorte une encoche dans laquelle peut coulisser un axe AX d'un siège SI afin d'être réceptionné par sa seconde extrémité E2.

Comme cela est illustré sur les figures 1 à 4, la largeur de la seconde extrémité E2 peut être supérieure à celle de la première extrémité E1, de manière à recevoir une partie arrière de la tête EA de l'axe AX qui est plus large que ce dernier.

Par ailleurs, afin de faciliter la réception d'un axe AX, en particulier lorsqu'il est légèrement incliné du fait que les deux axes AX peuvent être introduits l'un après l'autre dans les ouvertures OV des deux dispositifs D, plutôt que simultanément, une partie au moins de l'un au moins des deux bords B1 et B2 qui délimitent une ouverture OV peut être recourbée vers l'arrière de la première paroi PA1 qui est destinée à être située du côté longitudinal de la structure SV du véhicule V et donc à l'opposé d'une face latérale FL du siège SI. Par définition, l'arrière de la première paroi PA1 est la zone qui est située devant sa face interne FI1, tandis que l'avant de la première paroi PA1 est la zone qui est située devant sa face externe FE1 (laquelle est destinée à être orientée vers une face latérale FL du siège SI).

On notera que la première paroi PA1 de chaque dispositif D est ici sensiblement plane (hormis au niveau des bords B1 et B2 de son ouverture OV). Mais, cela n'est pas obligatoire. Elle pourrait en effet présenter une ou plusieurs courbures de manière à épouser sensiblement la forme de l'élément de fixation EF auquel elle est solidarisée.

Comme cela est illustré sur les figures 1 à 6, chaque dispositif D peut également et éventuellement comprendre une seconde paroi PA2 solidarisée à sa première paroi PA1 selon un angle choisi, par exemple égal à environ 90°. Cette seconde paroi PA2 est agencée de manière à permettre la fixation d'une première garniture GL dans une position sensiblement parallèle à une face latérale FL du siège SI et donc sensiblement parallèle à un côté longitudinal de la structure SV du véhicule V. Le positionnement d'une telle première garniture GL est schématiquement et non limitativement illustré sur la figure 7. Elle est destinée à habiller une partie longitudinale de la structure SV tout en masquant un dispositif D.

Les première PA1 et seconde PA2 parois peuvent être soit deux pièces soudées l'une à l'autre, soit deux parties d'une même pièce définies par pliage ou formage ou encore emboutissage. La face externe FE2 de la seconde paroi PA2 prolonge donc (ici sensiblement à 90°) la face externe FE1 de la première paroi PA1, et la face interne FI2 de la seconde paroi PA2 prolonge (ici sensiblement à 90°) la face interne FI1 de la première paroi PA1.

Comme illustré, la seconde paroi PA2 peut par exemple comprendre un trou T1 qui est préférentiellement muni d'un filetage, de manière à permettre la fixation de la première garniture GL dans une position sensiblement parallèle à ladite face latérale FL du siège SI. Le filetage peut être obtenu par taraudage du trou T1, ou bien par introduction dans le trou T1 d'une pièce filetée (par exemple en matériau synthétique). Dans ce dernier cas, le trou T1 est dit « fluo-taraudé ». Comme illustré, ce trou T1 est par exemple réalisé dans la partie inférieure PI de la seconde paroi PA2, laquelle est opposée à la partie supérieure PS où se trouve définie la première extrémité E1 de l'ouverture OV (dans la première paroi PA1).

Comme cela est illustré sur les figures 1 à 6, la seconde paroi PA2 d'un dispositif D peut comprendre une patte PF qui fait saillie dans la zone avant du dispositif D en faisant un angle aigu par rapport à sa face externe FE2. Cet angle aigu est par exemple compris entre environ 20° et environ 50°. Il peut par exemple être sensiblement égal à 45°. Comme cela est mieux illustré sur la figure 5, cette patte PF est destinée à contribuer avec le trou T1 à la fixation de la première garniture GL par rapport à la seconde paroi PA2 au moyen d'un cordon CN (de préférence élastique). Ce cordon CN est solidarisé à la première garniture GL et peut être passé derrière la patte PF (contre la face externe FE2 de la seconde paroi PA2), puis autour de la vis qui est introduite dans le trou T1.

Chaque patte PF peut par exemple être réalisée par découpage dans une seconde paroi PA2, puis par pliage selon l'angle aigu choisi.

On notera, comme cela est illustré sur les figures 1 à 6, que la première paroi PA1 d'un dispositif D peut comprendre au niveau de sa partie supérieure PS une extension (ou excroissance) PP par rapport au niveau de la première extrémité E1 de son ouverture OV. Comme cela est illustré sur la figure 6, cette extension PP est destinée à être logée dans une rainure RG qui est définie dans une partie interne de la première garniture GL. Plus précisément, elle (PP) permet de bien positionner la première garniture GL par rapport au dispositif D, et donc par rapport à la structure SV du véhicule V, notamment suivant les directions longitudinale (X) et transversale (Y).

Par ailleurs, et comme illustré, la seconde paroi PA2 peut également et éventuellement comprendre un trou complémentaire T2 de manière à permettre la fixation d'une seconde garniture non représentée (telle qu'un tapis), destinée à recouvrir un longeron de la structure SV du véhicule V. Comme le trou T1, ce trou complémentaire T2 peut être éventuellement taraudé.

On va maintenant décrire un procédé de positionnement selon l'invention permettant de positionner précisément un siège pré-assemblé SI par rapport à la structure SV du véhicule V.

Ce procédé comprend trois étapes principales.

Une première étape principale consiste à solidariser à la structure SV du véhicule V, en deux endroits choisis (éventuellement via des éléments de fixation EF), deux dispositifs de positionnement D du type de ceux décrits ci-avant. Comme indiqué précédemment et comme illustré sur la figure 4, cette solidarisation peut par exemple se faire par soudage.

Une deuxième étape principale du procédé consiste ensuite à introduire à l'intérieur de la structure SV un siège (pré-assemblé) SI comprenant deux axes AX (du type de ceux décrits ci-avant) saillant sur ses deux faces latérales FL opposées. Cette introduction peut par exemple se faire par le dessus de la structure (SV) avant la fixation du toit (ou pavillon) au moyen d'un équipement robotisé (tel qu'un manipulateur) de la chaîne de montage, qui est par exemple piloté par un technicien.

Une troisième étape principale du procédé consiste ensuite à déplacer le siège SI (par exemple au moyen de l'équipement robotisé précité) à l'intérieur de la partie arrière AH de la structure SV du véhicule V, afin que ses axes AX passent respectivement dans les premières extrémités libres E1 des ouvertures OV des premières parois PA1 des deux dispositifs de positionnement D. Une fois les axes AX engagés dans les premières extrémités libres E1, ils peuvent alors coulisser dans les zones intermédiaires des ouvertures OV, par exemple du fait qu'ils sont entraînés vers le bas par le poids du siège SI, jusqu'à ce qu'ils soient reçus par les secondes extrémités E2 de ces ouvertures OV. A ce stade, le siège SI est précisément positionné par rapport à la structure SV du véhicule V dans les trois directions longitudinale (X), transversale (Y) et verticale (Z), et il peut être solidarisé à cette structure SV, et par exemple à son élément de support PSA (voir figure 8).

On notera que pour faciliter le positionnement du siège SI, il est possible de commencer par passer l'un des deux axes AX dans la première extrémité libre E1 de l'ouverture OV de la première paroi PA1 de l'un des deux dispositifs de positionnement D, puis d'incliner légèrement le siège SI afin de passer l'autre axe AX dans la première extrémité libre E1 de l'ouverture OV de la première paroi PA1 de l'autre dispositif de positionnement D. C'est pour cela que les bords B1 et B2 qui délimitent les ouvertures OV peuvent être au moins partiellement recourbés vers l'arrière des dispositifs D.

On notera également que lorsque les deux axes AX sont montés sous une force de rappel élastique, il faut préférentiellement les écarter des faces latérales FL du siège SI avant de les introduire dans les premières extrémités E1 des ouvertures OV. Ensuite, une fois que les deux axes AX ont été reçus dans les secondes extrémités E2 des ouvertures OV des deux dispositifs D, on peut plaquer les têtes (extrémités libres) EA de ces axes AX contre les faces internes FI1 des premières parois PA1 des deux dispositifs de positionnement D. On comprendra qu'en présence de ressorts RS montés sur les axes AX, le plaquage des têtes d'axe EA contre les faces internes FI1 des premières parois PA1 se fait automatiquement grâce aux forces de rappel élastique.

Une fois que le siège SI est précisément positionné par rapport à la structure SV du véhicule V, grâce aux deux dispositifs D, on peut alors fixer sur les secondes parois PA2 de ces derniers (D) des premières garnitures GL, dans des positions sensiblement parallèles aux deux faces latérales FL du siège SI.

Comme indiqué précédemment, on peut par exemple fixer chaque première garniture GL au moyen d'une vis que l'on visse dans un trou T1 de la seconde paroi PA2 du dispositif D correspondant, lequel est de préférence muni d'un filetage. On notera qu'avant de procéder à ces vissages (complets) des premières garnitures GL on peut procéder à leur fixation au moyen de cordons CN qu'elles comportent, que l'on peut passer au moins derrière des pattes PF qui font un angle aigu par rapport aux faces externes FE2 des secondes parois PA2 des dispositifs D, ainsi que de préférence derrière les vis qui permettent la fixation des premières garnitures GL au niveau des trous T1 des secondes parois PA2.

Par ailleurs, une fois les premières garnitures GL fixées sur les dispositifs D, ainsi que sur les côtés longitudinaux de partie arrière AH de la structure SV du véhicule V, on peut également fixer des secondes garnitures (non représentées), destinées à recouvrir les longerons de la structure SV, sur les secondes parois PA2 des dispositifs D, grâce à des trous complémentaires T2 qui sont respectivement définis dans ces secondes parois PA2.

L'invention ne se limite pas aux modes de réalisation de dispositif de positionnement et de procédé de positionnement décrits ci-avant, seulement à titre d'exemple, mais elle englobe toutes les variantes que pourra envisager l'homme de l'art dans le cadre des revendications ci-après.

## Revendications

1. Dispositif de positionnement (D) pour un siège (SI) de véhicule automobile (V), propre à être solidarisé à une structure (SV) dudit véhicule automobile (V), et comprenant une première paroi (PA1) dans laquelle est définie une ouverture (OV) comprenant une première extrémité (E1) libre, propre à permettre le passage d'un axe (AX) saillant sur une face latérale (FL) dudit siège (SI), et une seconde extrémité (E2), propre à recevoir ledit axe (AX), **caractérisé en ce qu'**il comprend une seconde paroi (PA2) prolongeant ladite première paroi (PA1) selon un angle choisi et agencée pour permettre la fixation d'une première garniture (GL) dans une position sensiblement parallèle à ladite face latérale (FL) du siège (SI).

2. Dispositif selon la revendication 1, **caractérisé en ce que** ladite seconde paroi (PA2) fait un angle d'environ 90° avec ladite première paroi (PA1).

3. Dispositif selon l'une des revendications 1 et 2, **caractérisé en ce que** ladite seconde paroi (PA2) comprend un trou (T1) muni d'un filetage pour permettre ladite fixation de la première garniture (GL) dans une position sensiblement parallèle à ladite face latérale (FL) du siège (SI).

4. Dispositif selon l'une des revendications 1 à 3, **caractérisé en ce que** ladite seconde paroi (PA2) comprend une face externe (FE2) et une patte (PF) faisant un angle aigu par rapport à ladite face externe (FE2) et propre à permettre la fixation de ladite première garniture (GL) par rapport à ladite seconde paroi (PA2) au moyen d'un cordon (CN).

5. Dispositif selon l'une des revendications 1 à 4, **caractérisé en ce que** ladite seconde paroi (PA2) comprend un trou complémentaire (T2) pour permettre la fixation d'une seconde garniture propre à recouvrir un longeron de ladite structure (SV).

6. Dispositif selon l'une des revendications 1 à 5, **caractérisé en ce que** ladite première extrémité (E1) est propre à permettre le passage d'un axe (AX) saillant sur la face latérale (FL) d'une assise (AS) dudit siège (SI).

7. Dispositif selon l'une des revendications 1 à 6, **caractérisé en ce que** ladite seconde extrémité (E2) est plus large que ladite première extrémité (E1).

8. Dispositif selon l'une des revendications 1 à 7, **caractérisé en ce que** chaque première paroi (PA1) comprend au niveau d'une partie supérieure (PS) une extension (PP) par rapport au niveau de ladite première extrémité (E1) de son ouverture (OV), agencée pour être logée dans une garniture (GL) de manière à assurer son blocage suivant une direction longitudinale (X).

9. Procédé de positionnement d'un siège (SI) par rapport à une structure (SV) de véhicule automobile (V), **caractérisé en ce qu'**il consiste i) à solidariser à ladite structure (SV), en deux endroits choisis, deux dispositifs de positionnement (D) selon l'une des revendications 1 à 8, puis ii) à introduire à l'intérieur de la structure (SV) un siège (SI) comprenant deux faces latérales (FL) opposées et sur chacune desquelles saille un axe (AX), puis iii) à déplacer ledit siège (SI) de sorte que lesdits axes (AX) passent respectivement dans les premières extrémités libres (E1) des ouvertures (OV) des premières parois (PA1) des deux dispositifs de positionnement (D), puis coulissent dans lesdites ouvertures (OV) jusqu'à ce qu'ils soient reçus par les secondes extrémités (E2) de ces dernières.

10. Procédé selon la revendication 9, **caractérisé en ce que** l'on passe d'abord l'un desdits axes (AX) dans la première extrémité libre (E1) de l'ouverture (OV) de la première paroi (PA1) de l'un des dispositifs de positionnement (D), puis on passe l'autre axe (AX) dans la première extrémité libre (E1) de l'ouverture (OV) de la première paroi (PA1) de l'autre dispositif de positionnement (D).

11. Procédé selon l'une des revendications 9 et 10, **caractérisé en ce qu'**une fois lesdits axes (AX) reçus dans lesdites secondes extrémités (E2), on plaque des extrémités libres (EA) desdits axes (AX) contre des faces internes (FI1) des premières parois (PA1) des deux dispositifs de positionnement (D).

12. Procédé selon l'une des revendications 9 à 11, **caractérisé en ce que** l'on fixe une première garniture (GL) sur chaque seconde paroi (PA2) solidarisée à une première paroi (PA1) d'un dispositif de positionnement (D), dans une position sensiblement parallèle à la face latérale (FL) correspondante du siège (SI).

13. Procédé selon la revendication 12, **caractérisé en ce que** l'on fixe chaque première garniture (GL) au moyen d'une vis que l'on visse dans un trou (T1), muni d'un filetage, de la seconde paroi (PA2) du dispositif de positionnement (D) correspondant.

14. Procédé selon la revendication 13, **caractérisé en ce qu'**avant de visser chaque première garniture (GL) on procède à sa fixation, au moyen d'un cordon (CN), par rapport à une patte (PF) faisant un angle aigu par rapport à une face externe (FE2) de la seconde paroi (PA2) du dispositif de positionnement (D) correspondant.

15. Procédé selon l'une des revendications 9 à 14, **caractérisé en ce que** l'on fixe une seconde garniture, propre à recouvrir un longeron de ladite structure (SV), sur chaque seconde paroi (PA2) prolongeant une première paroi (PA1) d'un dispositif de positionnement (D), grâce à un trou complémentaire (T2) défini dans ladite seconde paroi (PA2).

## Claims

1. Positioning device (D) for a seat (SI) of a motor vehicle (V), adapted to be joined to a structure (SV) of said motor vehicle (V), and comprising a first wall (PA1), in which an aperture (OV) is defined comprising a first free end (E1), adapted to allow a stud (AX) projecting from a side face (FL) of said seat (SI) to pass through, and a second end (E2), adapted to receive said stud (AX), **characterised in that** it comprises a second wall (PA2) extending said first wall (PA1) at a selected angle and arranged so as to allow a first trim (GL) to be fixed in a position substantially parallel to said side face (FL) of the seat (SI).

2. Device according to claim 1, **characterised in that** said second wall (PA2) forms an angle of approximately 90° with said first wall (PA1).

3. Device according to either claim 1 or claim 2, **characterised in that** said second wall (PA2) comprises a hole (T1) provided with a thread to allow said fixing of the first trim (GL) in a position substantially parallel to said side face (FL) of the seat (SI).

4. Device according to any one of claims 1 à 3, **characterised in that** said second wall (PA2) comprises an external face (FE2) and a tab (PF) forming an acute angle with said external face (FE2) and adapted to allow said first trim (GL) to be fixed relative to said second wall (PA2) by means of a cord (CN).

5. Device according to any one of claims 1 to 4, **characterised in that** said second wall (PA2) comprises a complementary hole (T2) to allow a second trim, adapted to cover a side member of said structure (SV), to be fixed.

6. Device according to any one of claims 1 to 5, **characterised in that** said first end (E1) is adapted to allow a stud (AX) projecting from the side face (FL) of a base (AS) of said seat (SI) to pass through.

7. Device according to any one of claims 1 to 6, **characterised in that** said second end (E2) is wider than said first end (E1).

8. Device according to any one of claims 1 to 7, **characterised in that** each first wall (PA1) comprises, in an upper part (PS), an extension (PP) relative to the level of said first end (E1) of the aperture (OV) thereof, arranged so as to be accommodated in a trim (GL) in such a way as to block it in a longitudinal direction (X).

9. Method for positioning a seat (SI) relative to a structure (SV) of a motor vehicle (V), **characterised in that** it consists in i) joining two positioning devices (D) according to any one of claims 1 to 8 to said structure (SV) in two selected places, then ii) introducing to the inside of the structure (SV) a seat (SI) comprising two opposing side faces (FL) from each of which a stud (AX) projects, then iii) displacing said seat (SI) in such a way that said studs (AX) pass into the respective first free ends (E1) of the apertures (OV) of the first walls (PA1) of the two positioning devices (D), then slide into said apertures (OV) until they are received by the second ends (E2) thereof.

10. Method according to claim 9, **characterised in that** one of said studs (AX) is initially passed into the first free end (E1) of the aperture (OV) of the first wall (PA1) of one of the positioning devices (D), and subsequently the other stud (AX) is passed into the first free end (E1) of the aperture (OV) of the first wall (PA1) of the other positioning device (D).

11. Method according to either claim 9 or claim 10, **characterised in that** once said studs (AX) have been received in said second ends (E2), the free ends (EA) of said studs (AX) are pinned against internal faces (FI1) of the first walls (PA1) of the two positioning devices (D).

12. Method according to any one of claims 9 to 11, **characterised in that** a first trim (GL) is fixed to each second wall (PA2) which is joined to a first wall (PA1) of a positioning device (D), in a position substantially parallel to the corresponding side face (FL) of the seat (SI).

13. Method according to claim 12, **characterised in that** each first trim (GL) is fixed by means of a screw which is screwed into a hole (T1), provided with a thread, of the second wall (PA2) of the corresponding positioning device (D).

14. Method according to claim 13, **characterised in that** before each first trim (GL) is screwed, it is fixed, by means of a cord (CN), relative to a tab (PF) which forms an acute angle with an external face (FE2) of the second wall (PA2) of the corresponding positioning device (D).

15. Method according to any one of claims 9 to 14, **characterised in that** a second trim, adapted to cover a side member of said structure (SV), is fixed to each second wall (PA2) which extends a first wall (PA1) of a positioning device (D), by means of a complementary hole (T2) defined in said second wall (PA2).

## Patentansprüche

1. Positioniervorrichtung (D) für einen Sitz (S1) im Kraftfahrzeug (V), die geeignet ist, fest mit einer Struktur (SV) des besagten Kraftfahrzeugs (V) verbunden zu werden, und die eine erste Wand (PA1) umfasst, in der eine Öffnung (OV) mit einem ersten freien Ende (E1) definiert ist, die geeignet ist, den Durchgang einer Achse (AX) zuzulassen, die auf einer Seitenfläche (FL) des besagten Sitzes (SI) hervorspringt, und ein zweites Ende (E2), das geeignet ist, die besagte Achse (AX) aufzunehmen, **dadurch gekennzeichnet, dass** sie eine zweite Wand (PA2) umfasst, die die besagte erste Wand (PA1) in einem gewählten Winkel verlängert und so gestaltet ist, dass eine erste Verkleidung (GL) in einer deutlich parallelen Position zur besagten Seitenwand (FL) des Sitzes (SI) befestigt werden kann.

2. Vorrichtung nach Anspruch 1, **dadurch gekennzeichnet, dass** die besagte zweite Wand (PA2) einen Winkel von circa 90° zur besagten ersten Wand (PA1) beschreibt.

3. Vorrichtung nach einem der vorstehenden Ansprüche 1 und 2, **dadurch gekennzeichnet, dass** die besagte zweite Wand (PA2) ein mit einem Gewinde versehenes Loch (T1) umfasst, das die besagte Befestigung der ersten Verkleidung (GL) in einer deutlich parallelen Position zur besagten Seitenwand (FL) des Sitzes (SI) ermöglicht.

4. Vorrichtung nach einem beliebigen der vorstehenden Ansprüche 1 bis 3, **dadurch gekennzeichnet, dass** die besagte zweite Wand (PA2) eine Außenseite (FE2) und ein Befestigungseisen (PF) umfasst, das einen spitzen Winkel zur besagten Außenseite (FE2) bildet und geeignet ist, die Befestigung der besagten ersten Verkleidung (GL) gegenüber der besagten zweiten Wand (PA2) vermittels eines Seils (CN) zuzulassen.

5. Vorrichtung nach einem beliebigen der vorstehenden Ansprüche 1 bis 4, **dadurch gekennzeichnet, dass** die besagte zweite Wand (PA2) ein ergänzendes Loch (T2) für die Befestigung einer zweiten Verkleidung umfasst, die geeignet ist, einen Holm der besagten Struktur (SV) abzudecken.

6. Vorrichtung nach einem beliebigen der vorstehenden Ansprüche 1 bis 5, **dadurch gekennzeichnet, dass** das besagte erste Ende (E1) geeignet ist, den Durchgang einer Achse (AX) zuzulassen, die auf der Seitenfläche (FL) einer Sitzfläche (AS) des besagten Sitzes (SI) hervorspringt.

7. Vorrichtung nach einem beliebigen der vorstehenden Ansprüche 1 bis 6, **dadurch gekennzeichnet, dass** das besagte zweite Ende (E2) breiter als das besagte erste Ende (E1) ist.

8. Vorrichtung nach einem beliebigen der vorstehenden Ansprüche 1 bis 7, **dadurch gekennzeichnet, dass** jede erste Wand (PA1) an einem oberen Teil (PS) eine Ausdehnung (PP) gegenüber der Ebene des besagten ersten Endes (E1) seiner Öffnung (OV) umfasst, die so gestaltet ist, dass sie in einer Verkleidung (GL) so untergebracht werden kann, dass ihre Blockierung in einer Längsrichtung (X) gesichert ist.

9. Verfahren zur Positionierung eines Sitzes (SI) im Verhältnis zur Struktur (SV) eines Kraftfahrzeugs (V), **dadurch gekennzeichnet, dass** es darin besteht, a) zwei Positionierungsvorrichtungen (D) nach einem der Ansprüche 1 bis 8 an zwei gewählten Stellen fest mit der besagten Struktur zu verbinden, dann b) in die Struktur (SV) einen Sitz (SI) einzusetzen, der zwei entgegengesetzte Seitenflächen (FL) umfasst und auf der jeweils eine Achse (AX) hervorspringt, dann c) den besagten Sitz (SI) so zu verschieben, dass die besagten Achsen (AX) in die jeweiligen ersten freien Enden (E1) der Öffnungen (OV) der ersten Wände (PA1) der beiden Positionierungsvorrichtungen (D) eintreten, dann in den besagten Öffnungen (OV) gleiten, bis sie von den zweiten Enden (E2) der letzteren aufgenommen werden.

10. Verfahren nach Anspruch 9, **dadurch gekennzeichnet, dass** man zunächst eine der besagten Achsen (AX) in das erste freie Ende (E1) der Öffnung (OV) der ersten Wand (PA1) einer der Positionierungsvorrichtungen (D) einsetzt, dann die andere Achse (AX) in das erste freie Ende (E1) der Öffnung (OV) der ersten Wand (PA1) der anderen Positionierungsvorrichtung (D) einsetzt.

11. Verfahren nach einem der vorstehenden Ansprüche 9 und 10, **dadurch gekennzeichnet, dass** man, wenn die besagten Achsen (AX) in den besagten zweiten Enden (E2) aufgenommen wurden, die freien Enden (EA) der besagten Achsen (AX) gegen die Innenseiten (FI1) der ersten Wände (PA1) der beiden Positionierungsvorrichtungen (D) andrückt.

12. Verfahren nach einem beliebigen der vorstehenden Ansprüche 9 bis 11, **dadurch gekennzeichnet, dass** man eine erste Verkleidung (GL) auf jeder zweiten Wand (PA2) befestigt, die fest mit einer ersten Wand (PA1) einer Positionierungsvorrichtung (D) verbunden ist und dies in einer deutlich parallelen Position zur entsprechenden Seitenfläche (FL) des Sitzes (SI).

13. Verfahren nach Anspruch 12, **dadurch gekennzeichnet, dass** man jede erste Verkleidung (GL) vermittels einer Schraube befestigt, die man in ein mit einem Gewinde versehenen Loch (T1) der zweiten Wand (PA2) der entsprechenden Positionierungsvorrichtung (D) einschraubt.

14. Verfahren nach Anspruch 13, **dadurch gekennzeichnet, dass** man vor dem Einschrauben jeder ersten Verkleidung (GL) diese vermittels eines Seils (CN) gegenüber einem Befestigungseisen (PF) befestigt, das einen spitzen Winkel zu einer Außenseite (FE2) der zweiten Wand (PA2) der entsprechenden Positionierungsvorrichtung (D) bildet.

15. Verfahren nach einem beliebigen der vorstehenden Ansprüche 9 bis 14, **dadurch gekennzeichnet, dass** man eine zweite Verkleidung, die geeignet ist, einen Holm der besagten Struktur (SV) abzudecken, auf jeder zweiten Wand (PA2) befestigt, die eine erste Wand (PA1) einer Positionierungsvorrichtung (D) verlängert, dies an einem ergänzenden Loch (T2), das in der besagten zweiten Wand (PA2) definiert ist.
